Europäisches Patentamt

European Patent Office

Office européen des brevets

(19)

(11) EP 1 612 781 A2

(12) **EUROPEAN PATENT APPLICATION**

(43) Date of publication:
04.01.2006 Bulletin 2006/01

(51) Int Cl.:
**G11B 7/135** (2006.01)

(21) Application number: 05105060.7

(22) Date of filing: 09.06.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **30.06.2004 JP 2004192939**

(71) Applicant: **KABUSHIKI KAISHA TOSHIBA Tokyo (JP)**

(72) Inventors:
• **Watabe, Kazuo, Toshiba Corp. Minato-ku, Tokyo,105-8001 (JP)**

• **Maruyama, Sumitaka, Toshiba Corporation Minato-ku, Tokyo,105-8001 (JP)**
• **Iwata, Katsuo, Toshiba Corporation Minato-ku, Tokyo,105-8001 (JP)**
• **Ogawa, Akihito, Tohiba Corporation Minato-ku, Tokyo, 105-8001 (JP)**

(74) Representative: **Henkel, Feiler & Hänzel Möhlstrasse 37 81675 München (DE)**

(54) **Optical disc apparatus**

(57) An optical disc drive (11) of the present invention is configured to have a predetermined range of A/M$^2$, which is determined by an area A of a light-receiving surface of a photodetector (26) to receive a reflected laser beam reflected on first and second recording layers of an optical disc, and a lateral magnification M (ratio of a condenser lens (25) focal length fc to an objective lens (24) focal length fo) of a light-receiving system to pass a reflected laser beam.

FIG. 2

EP 1 612 781 A2

## Description

The present invention relates to an optical disc apparatus, which can play back preferable information with little crosstalk, when playing back information from an optical disc having information recorded in two or more recording layers.

An optical disc used as an information recording medium is available in a play-only type represented by CD and DVD-ROM, a write-once type represented by CD-R and DVD-R, and a rewritable type used for an external memory of a computer and a record-playback video (video recording).

Nowadays, increase of the number of recording layers to two or more has been studied to increase the recording capacity of an optical disc of the next generation DVD standard. In this case, it is necessary to make an intermediate layer between the recording layers thin compared with a current DVD standard disc. However, it is known that crosstalk between layers increases when an intermediate layer is thin.

Concerning the crosstalk level, Japanese Industrial Standards (JIS) X 6241 (1997) defines that the ratio of $A/M^2$ (detector size [photodetector area] to the detection lateral magnification square) is $100 \ \mu m^2 < A/M^2 < 144 \ \mu m^2$, as a specification of an optical head used for playing back information of a DVD standard optical disc.

It is necessary to make an intermediate layer thin compared with a current two-layer DVD-ROM disc for increasing the recording capacity of a new standard disc called a next-generation DVD (hereinafter, referred to as HD DVD) among the DVD standard optical discs having two or more recording layers.

However, if $A/M^2$ for a current DVD standard optical disc is applied to HD DVD without modifications, inter-layer crosstalk increases in a rewritable two-layer disc (HD DVD-RW) and causes a problem of failing to obtain a preferable playback signal.

Further, as the diameter R of an optical beam focused on an optical disc through an objective lens fluctuates by f (RI) (f indicates a function including other factors) under the influence of Rim Intensity (RI) indicating the relation between an incident light flux diameter and an aperture diameter of an objective lens used for an optical head of an optical disc drive, it is difficult to ignore the influence of RI. Thus, an optical disc drive and optical head taking account of the influence of RI on $A/M^2$ are not yet in practical use.

According to an aspect of the present invention, there is provided an optical disc apparatus comprising:

a light source;
an objective lens which focuses a light from the light source on at least one of recording layers of a recording medium having at least two recording layers;
a photodetector which receives a light reflected on one of recording layers of a recording medium having at least two recording layers, and outputs a signal corresponding to the intensity of the light; and
a condenser lens which focuses a light reflected on one of recording layers of a recording medium having at least two recording layers on the photodetector, wherein the objective lens and condenser lens satisfies $A/M^2 < 100 \ \mu m^2$ when $A/M^2$ is defined by assuming that the area of a light-receiving surface of the photodetector is A, the focal length of the objective lens is fo, the focal length of the condenser lens is fc, and fc/fo is M.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a schematic illustration for explaining an example of a recording medium (an optical disc) applicable to an optical disc drive and optical head unit according to an embodiment of the present invention;
FIG. 2 is a schematic illustration for explaining an example of an optical disc apparatus and an optical head unit according to an embodiment of the present invention;
FIGS. 3 A to 3C are schematic illustrations for explaining a cause of inter-layer crosstalk occurring when a reflected laser beam is obtained from two recording layers by using the optical disc shown in FIG. 1 and optical disc drive shown in FIG. 2;
FIG. 4 is a graph for explaining the relation between the inter-layer crosstalk explained in FIG. 3 and the magnitude of $A/M^2$ defined by the area A of a photodetector to receive a reflected laser beam and the lateral magnification M of a light-receiving system to pass the reflected laser beam (the ratio of a focal length fc of a condenser lens to a focal length fo of an objective lens); and
FIG. 5 is a graph showing the correction of the magnitude of $A/M^2$ defined by the area A of a photodetector to receive a reflected laser beam and the lateral magnification M of a light-receiving system to pass the reflected laser beam (the ratio of a focal length fc of a condenser lens to a focal length fo of an objective lens), taking account of Rim Intensity (RI) showing the relation between the objective lens aperture diameter and incident light beam diameter.

Hereinafter, an embodiment of the present invention will be explained in detail with reference to the accompanying drawings.

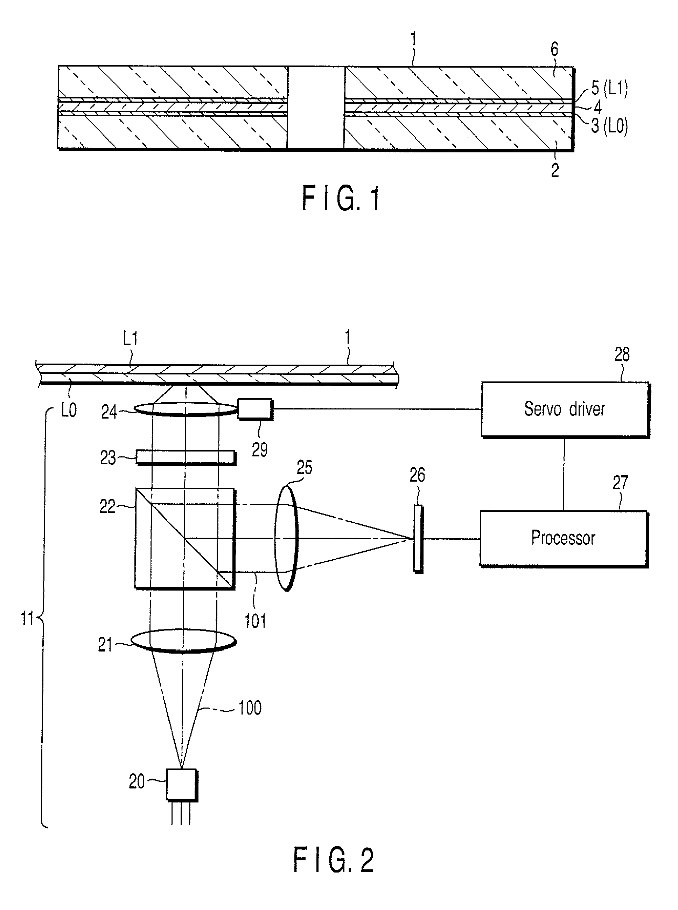

FIG. 1 is a schematic illustration of an example of an optical disc suitable for recording or playing back information with an optical head unit of the present in-

As shown in FIG. 1, an optical disc (a recording medium) 1 has a first information recording layer 3 including a phase change recording film, on a first substrate 2 made of polycarbonate.

On the first information recording layer 3, an intermediate layer 4 having a predetermine transmittivity against a wavelength of laser beam emitted from a semiconductor laser unit 20 of an optical head unit 11, is stacked. On the intermediate layer 4, a second information recording layer 5 is stacked. The intermediate layer 4 is usually made of adhesive or UV-curable resin. The second information recording layer 5 is covered by a second substrate 6 made of polycarbonate.

In the optical disc 1, the information recording layers 3 and 5 may be a play-only layer composed of a reflection film made of metal, or a record-playback layer composed of phase change film. Further, in the optical disc 1, only one of two recording layers 3 or 5 may be a play-only layer and the other may be a record-playback layer.

As described above, the optical disc 1 can be formed either by stacking the first substrate 2 and second substrate 6 in order, or by bonding two substrates having the information recording layer 3 (or 5) with a predetermined thickness to the intermediate layer to be faced to each other 4 by means of adhesive material. The substrate with the information recording layer formed on one side is about 0.6 mm thick, and the whole optical disc is about 1.2 mm thick (a reference substrate thickness).

The optical disc 1 is a so-called single-sided two-layer disc. The first information recording layer 3 is a semitransparent having a predetermined transmittivity against a wavelength of laser beam emitted from the semiconductor laser unit 20. Therefore, the first information recording layer 3 can transmit a light as well as reflecting a certain amount of light. Thus, when light is radiated to the optical disc 2 from the direction of the substrate 2, information can be recorded on one of the information recording layers 3 and 5, or information can be played back from one of the recording layers, by adjusting a focus to one of the first and second recording layers 3 and 5 (by controlling the distance between the objective lens 24 and optical disc 1).

The intermediate layer 4 has a function to optically isolate the information recording layer 3 (or 5) from the other information recording layer 5 (or 3), while the information of one information recording layer 3 (or 5) is being played back. In this sense, two information recording layers 3 and 5 are preferably separated as far as possible, and the intermediate layer 4 is preferably thick. However, in that case, accurate playback of both layers by single optical system becomes hard.

Namely, when the thickness from the surface of the substrate 2 to the center of the intermediate layer 4 is defined as a load of an objective lens described later with reference to FIG. 2, an aberration corresponding to a thickness error of the half thickness of the intermediate layer 4 occurs, in any case of recording or playing back information in/from the information recording layer 3 (or 5)

Therefore, from the viewpoint of reducing aberration in the optical system, the intermediate layer 4 is preferably thin. Namely, the thickness of the intermediate layer 4 is decided at a trade-off point between an aberration of the recording/playing back optics and a crosstalk between the information recording layers 3 and 5.

FIG. 2 is a schematic illustration for explaining an example of an optical head unit, which records information in the optical disc shown in FIG. 1, or plays back information from the optical disc.

As shown in FIG. 2, an optical head unit 11 has a semiconductor laser (a light source) 20 to output a laser beam or a violet light beam of 400-410 nm. A wavelength of the laser beam is preferably 405 nm.

A laser beam 100 emitted from the semiconductor laser 20 is collimated by a collimator lens 21. The collimated parallel beam passes through a polarizing beam splitter 22 and quarter-wavelength plate 23, and is guided by the objective lens 24 to the recording surface of the optical disc 1 explained later with reference to FIG. 2.

The laser beam 100 guided to the optical disc 1 is focused on one of the first and second recording layers, by the convergence given by the objective lens 24 and the distance between the objective lens and optical disc 1.

The laser beam 100 focused on the recording layer of the optical disc 1 is reflected on the recording layer, returned to the objective lens 24 as a reflected laser beam 101, and returned to a polarizing beam splitter 22 through the quarter-wavelength plate 23.

The reflected laser beam 101 returned to the polarizing beam splitter 22 is reflected toward the condenser lens 25 on the polarizing surface of the polarizing beam splitter 22, and forms an image on the light-receiving surface of a photodetector 26 as a converging beam having a beam spot size corresponding to the focal length defined by the convergence given by the condenser lens 25.

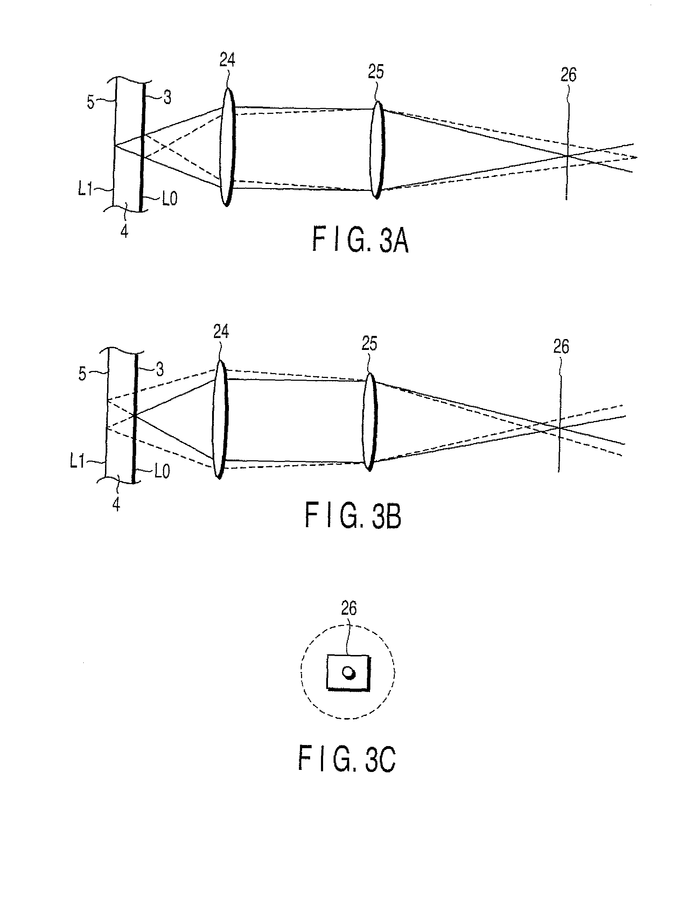

The light-receiving part of the photodetector is usually divided into several sections, each of which outputs a current corresponding to the light intensity. The current outputted from each light-receiving section is converted into a voltage by a not-shown I/V amplifier, and processed by a processor 27 to be usable as a HF (playback) signal, focus error signal and track error signal. The HF (playback) signal is converted into a predetermined signal format, or outputted to a temporary storage or external storage through a given interface. The size of the light-receiving section of the photodetector 26 is defined, so that the $A/M^2$, which is determined by the area "A" of the light-receiving section of the photodetector and the lateral magnification M of the light-receiving system (the ratio of the focal length fc of the condenser lens to the focal length fo of the objective lens), becomes a predetermined value as explained hereinafter with reference to FIG. 3.

The focus error signal and track error signal among those obtained by the processor 27 are converted by a servo driver 28 into signals usable as a focus control signal and track control signal to operate an actuator 29, which displaces the position of the objective lens 24, and supplied to the actuator 29. Therefore, the objective lens 24 held by the actuator 29 is optionally moved in the vertical direction to approach to and separate from the information recording layer 3 (or 5) of the optical disc 1, and/or in the disc radial direction. Namely, the objective lens 24 is controlled by the servo driver 28 to follow the information track on the optical disc 1.

Next, description will be given on optimization of the elements of the optical head unit 11 for recording or playing back information in/from a new-standard optical disc called a next-generation DVD (hereinafter referred to as HD DVD).

Assuming that the wavelength of a light source (the output of a semiconductor laser unit) is 405 nm and the numerical aperture NA of the objective lens 24 is 0.65, the suitable thickness of the intermediate layer 4 of the optical disc 1 is 15-25 $\mu$m as a specification of HD DVD considering the trade-off mentioned above. Conditions on the thickness of the intermediate layer 4 described below are applicable to an optical disc having more than three information recording layers or a disc having two or more intermediate layers.

Description will now be given on an inter-layer crosstalk upon playback of a two-layer optical disc with reference to FIGS. 3A to 3C.

FIGS. 3A-3C are schematic illustrations of the light-receiving system of the optical head unit of FIG. 2, or the path of the reflected laser beam 101. FIG. 3A shows the case when the information of the information recording layer 5 (L1) far from the objective lens 24 is played back. FIG. 3B shows the case when the information of the information recording layer 3 (L0) near the objective lens 24 is played back (or, recorded).

As shown in FIG. 3A, the reflected laser beam 101 (solid line) from the information recording layer 5 (L1) becomes parallel beam after passing through the objective lens 24, and is focused by the condenser lens 25 onto the photodetector 26.

The photodetector 26 detects the focused laser beam reflected from the target information recording layer (L1 in this case). However, the optical disc 1 generates (reflects) a certain amount of reflected laser beam as indicated by a dotted line even in the information recording layer 3 (L0) The reflected laser beam from the recording layer other than the target information recording layer is called a crosstalk beam.

Unlike the reflected laser beam indicated by a solid line, the crosstalk beam (a dotted line) becomes a diverging beam, not a parallel beam, after passing through the objective lens 24, and is led to the photodetector 26 as a so-called defocused beam, though it is given convergence by the condenser lens 25.

Thus, as shown in FIG. 3C, a part (a central part) of the crosstalk beam is radiated to the photodetector 26 (a dotted circle). This crosstalk beam is put (superposed) on the laser beam signal from the target information recording layer 5, as a noise component, and defined as an inter-layer crosstalk.

Likewise, in FIG. 3B, the reflected laser beam from the information recording layer 5 (L1) becomes a crosstalk beam with respect to the reflected laser beam from the information recording layer 3 (L0). (The illustration of the beam on the photodetector is the same as FIG. 3C, and omitted.)

The difference between the crosstalk beams shown in FIG. 3A and FIG. 3B is whether the luminous flux after passing through the objective lens 24 is a converging beam or a diverging beam. As explained in FIG. 3A, the beam becomes a defocused beam on the photodetector 26, and causes an inter-layer crosstalk.

An inter-layer crosstalk is defined by the ratio of the parts of a crosstalk beam radiated to the photodetector 26, as described above. Thus, as far as all parts of a converging beam from a target information recording layer can be received on the photodetector 26, the crosstalk influence is less when the photodetector size is small. When the size of the photodetector 26 is constant, the inter-layer crosstalk element becomes small if the crosstalk beam size is large.

The crosstalk beam size on the photodetector 26 is determined by the lateral magnification M of the light-receiving system, as described before. When the aperture radii of the objective lens 24 and condenser lens 25 are the same, the lateral magnification M is determined by the ratio of the focal length fc of the condenser lens 24 to the focal length fo of the objective lens 25, and obtained from an equation M = fc/fo.

Therefore, assuming that the area of the light-receiving part of the photodetector 26 is A and the lateral magnification of the light-receiving system is M, a value of $A/M^2$ can be defined as an index almost proportional to an inter-layer crosstalk. The $A/M^2$ concerning a current DVD-standard optical disc has been disclosed in the aforementioned prior art document, Japanese Industrial Standards (JIS) X 6241: 1997. The value of $A/M^2$ has a range of $100 < A/M^2 < 144$ $\mu m^2$.

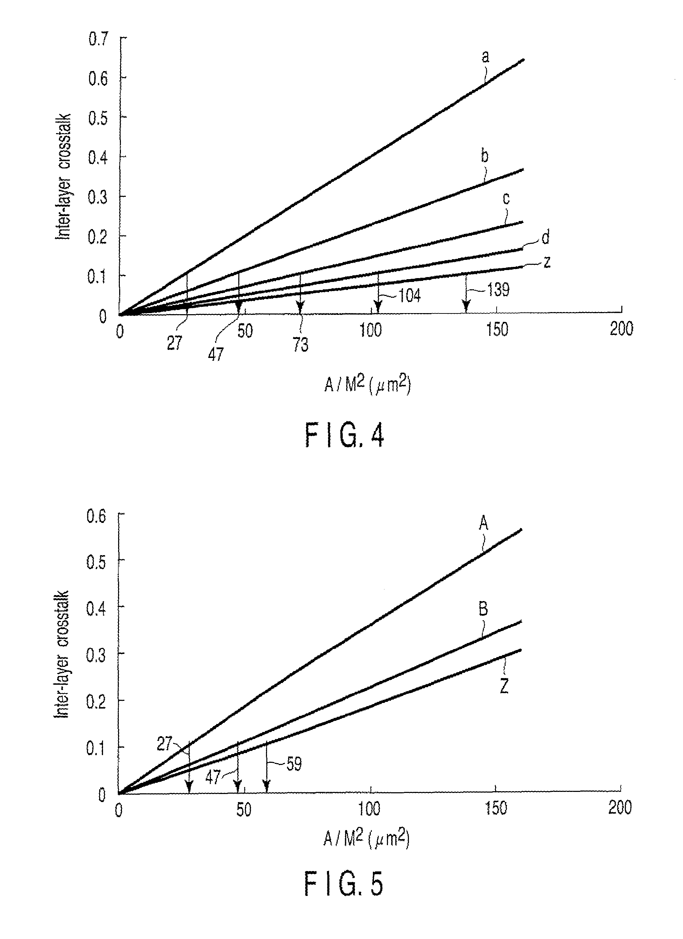

FIG. 4 is a graph plotting $A/M^2$ in the horizontal axis and an inter-layer crosstalk in the vertical axis.

As seen from FIG. 4, there is a certain relationship as explained before between the level (magnitude) of inter-layer crosstalk and the thickness of the intermediate layer 4 in the optical disc 1. It is obvious that when the intermediate layer 4 is thin, the inter-layer crosstalk is increased. In FIG. 4, the curve a indicates the case when the thickness of the intermediate layer 4 is 15 $\mu$m. Likewise, the curve b indicates the case when the thickness of the intermediate layer 4 is 20 $\mu$m, the curve c indicates the case when the thickness of the intermediate layer 4 is 25 $\mu$m, and the curve d indicates the case when the thickness of the intermediate layer 4 is 30 $\mu$m. The curve z is drawn to compare the thickness (40 $\mu$m) of the intermediate layer 4 in a current DVD-standard optical disc.

In a current DVD-standard optical disc, a maximum value of A/M$^2$ is 144 $\mu$m$^2$, and it is seen that the maximum inter-layer crosstalk is 10.2% (0.102).

By applying this maximum value of inter-layer crosstalk to a next-generation optical disc of the present invention, it is known that A/M$^2$ < 27 $\mu$m$^2$ when the intermediate layer 4 is 15 $\mu$m thick, A/M$^2$ < 47 $\mu$m$^2$ when the intermediate layer 4 is 20 $\mu$m thick, A/M$^2$ < 73 $\mu$m$^2$ when the intermediate layer 4 is 25 $\mu$m thick, and A/M$^2$ < 104 $\mu$m$^2$ when the intermediate layer 4 is 30 $\mu$m thick. It is seen from the above that when the value of A/M$^2$ is small, the inter-layer crosstalk level can be decreased.

Therefore, a small value of A/M$^2$ is better from the viewpoint of inter-layer crosstalk. Concerning HD DVD, it is preferable to make the value of A/M$^2$ smaller than a current DVD standard, that is, A/M$^2$ < 100 $\mu$m$^2$.

More concretely, when the intermediate layer 4 is 20 $\mu$m thick, it is desirable from the viewpoint of decreasing an inter-layer crosstalk to satisfy A/M$^2$ < 47 $\mu$m$^2$ as a specification of light-receiving system in an optical head unit (an optical disc drive) suitable for the optical disc 1 of the present invention.

A lower value of A/M$^2$ is desirable from the viewpoint of inter-layer crosstalk, and a lower limit value cannot be defined. On the other hand, a lower limit value of the area A of the photodetector 26 and an upper limit value of the detection lateral magnification M can be practically defined. The size of the photodetector 26 is at least a square having a 40 $\mu$m side (A = 1600 $\mu$m$^2$). On the other hand, a maximum value of lateral magnification M is determined by a maximum value of fc (the focal length of the condenser lens 25). Then, considering the influence of fc on the size of the optical head 11, it is appropriate to set a maximum of 120 mm (the same size as a disc) as an upper limit. Therefore, when fo (the focal length of the objective lens 24) is 3 mm, M = 40.

Based on the above values, the lower limit of A/M$^2$ is A/M$^2$ = 1600/40$^2$ = 1.0. Therefore, it is necessary to satisfy 1 < A/M$^2$ < 47 $\mu$m$^2$ as a specification of the light-receiving system in the optical disc drive of the present invention.

Nowadays, it is well known that the influence of Rim Intensity (RI), which indicates the relation between the incident luminous flux diameter and the aperture diameter of the objective lens 25, cannot be ignored as a factor responsible for the characteristics of the optical head unit 11 (particularly, the objective lens 24).

RI is a value to express the optical intensity at the aperture rim of a lens as a ratio (or percentage) to the intensity at the center of optical beam, with respect to a laser beam coming into a lens, and is one of parameters to express the optical characteristics of a beam applied to an objective lens.

For example, in the optical disc drive, the diameter R of a laser beam focused on an optical disc through an objective lens is can be obtained by

$$R = 2 \times f(RI) \times \lambda / NA$$

(f indicates a function including other factors). Even though the objective lens 24 is almost annular (a perfect circle), if a laser beam from the semiconductor laser unit 20 is diverging and has the elliptical cross section, it is necessary to consider the direction. In this case, RI is defined including the direction as RIx or RIy.

For example, when RI(no direction) = 0.6 and wavelength $\lambda$ = 405 nm and NA = 0.65, a beam diameter R is R = 0.5260 $\mu$m. when RI (no direction) = 0.7 and wavelength $\lambda$ = 405 nm and NA = 0.65, a beam diameter R is R = 0.5218 $\mu$m.

Further, in the optical disc drive, a collimator lens 21 is used in addition to the objective lens 24, particularly in the semiconductor laser unit 20.

Therefore, in the present invention, RI that is conventionally fixed to 1.0 (an incident light intensity is uniform over a pupil) is changed, and the degree of an inter-layer crosstalk including the influence of RI is also considered.

FIG. 5 shows the dependence of an inter-layer crosstalk on A/M$^2$, when the intermediate layer 4 in the optical disc 1 is set to 20 $\mu$m thick and RI is changed as a parameter.

As seen from FIG. 5, as a result of setting RI to 0.135 (curve A), 0.6 (curve B) and 1.0 (curve Z, a comparing example), it is confirmed that the inter-layer crosstalk value increases when RI is small (low), and decreases when RI is large (high). The RI= 0.135 (a lower limit) used in FIG. 5 can be theoretically lowered as close as possible to 0, but substantially it is about 1/e$^2$ (=0.135). An upper limit is theoretically 1.0 (conventional = a comparing example, without considering RI).

According to FIG. 5, when the value of A/M$^2$ is set as A/M$^2$ < 27 $\mu$m$^2$ at RI = 0.135 (curve A) and A/M$^2$ < 47 $\mu$m$^2$ at RI = 0.6 (curve B), the inter-layer crosstalk value (magnitude) can be decreased.

There occurs a problem that the light usage efficiency of a lens is lowered when RI is high (large). Moreover, the beam diameter of the light focused by a lens is increased when RI is low (small). Therefore, an optimum range of RI considering a trade-off is 0.55 < RI < 0.70. When RI is changed, A/M$^2$ is not largely changed unlike when the thickness of the intermediate layer 4 in the optical disc 1 is changed. FIG. 5 shows an example of the intermediate layer 4 with the thickness of 20 $\mu$m, but it has been confirmed that the substantially the same effect can be obtained even if the intermediate layer 4 is 15 $\mu$m or 30 $\mu$m thick.

Next, a preferable value of A/M$^2$ will be considered.

When considering a lower limit value of A/M$^2$

assuming that the intermediate layer 4 is 15-30 $\mu$m thick, the lower limit value of A/M$^2$ is 2-3 $\mu$m$^2$.

Concretely, assuming that a maximum value of fc (a focal length of the condenser lens 25) is almost the same as the size of an optical disc according to the method explained above and assuming that fo (a focal length of the condenser lens 24) is 3 mm, M=26.7 is obtained when the disk size is 80 mm. Therefore, A/M$^2$ = 1600/26.7$^2$ = 2.3.

Conversely, assuming that a maximum value of fc is almost the same as the radius, not the diameter, of an optical disc caused by miniaturization of the optical disc drive, when the outside dimension of the optical disc is 120 mm, fc = 60 mm and M = 20. In this case, A/M$^2$ = 1600/20$^2$ = 4. When the outside diameter of the optical disc is 80 mm, fc = 40 mm and M = 13.3. Therefore, A/M$^2$ = 1600/13.3$^2 \fallingdotseq$ 9.

As described hereinbefore, according to the present invention, in inter-layer crosstalk in an optical disc having two or more recording layers can be certainly decreased and good playback characteristics can be obtained, by setting the area of a photodetector to receive a reflected laser beam from an optical disc to "A" ,and setting the largeness of A/M$^2$ defined by the lateral magnification M (the ratio of a condenser lens focal length fc to an objective lens focal length fo) of the light-receiving system to pass a reflected laser beam to 1 < A/M$^2$ < 47 $\mu$m$^2$.

In the detailed description of the invention, an optical disc drive is taken as an example for explaining the embodiment of the invention. But, it is apparent that the invention is applicable also to a movie camera and portable audio equipment to contain musical data.

**Claims**

1. An optical disc drive **characterized by** comprising:

   a light source (20);
   an objective lens (24) which can focus a light from the light source (20) on at least one of recording layers of a recording medium having at least two recording layers;
   a photodetector (27) which can receive a light reflected on one of the recording layers of the recording medium having at least two recording layers, and output a signal corresponding to the intensity of the light; and
   a condenser lens (26) which can focus the light reflected on the one of recording layers of the recording medium having at least two recording layers, on the photodetector (27),
   wherein the objective lens (24) and condenser lens (26) satisfy A/M$^2$ < 100 $\mu$m$^2$ when A/M$^2$ is defined by assuming that the area of a light-receiving surface of the photodetector (27) is A, the focal length of the objective lens (24) if fo, the focal length of the condenser lens (26) is fc, and fc/fo is M.

2. The optical disc drive according to claim 1, **characterized in that** a wavelength of light from the light source (20) is 400-410 nm.

3. The optical disc drive according to claim 2, **characterized in that** a value RI which expresses an optical intensity at an aperture edge of a lens as a ratio to an intensity at the center of light with respect to light coming into the objective lens (24), is 0.55 < RI < 0.7.

4. The optical disc drive according to claim 1, 2 or 3, **characterized in that** the numerical aperture of the objective lens (24) is NA = 0.65.

5. The optical disc drive according to any one of claims 1 to 4, **characterized in that** the value of A/M$^2$ is 1 < A/M$^2$ < $^{47}$ $\mu$m$^2$.

6. The optical disc drive according to claim 5, **characterized in that** the value of A/M$^2$ is 3 < A/M$^2$ < 27 $\mu$m$^2$.

7. The optical disc drive according to any one of claims 1 to 6, **characterized in that** the thickness between recording layers of the recording medium is 20 $\mu$m.

8. An optical disc drive **characterized by** comprising:

   an objective lens (24) which has a focal length of fo and can focus light having wavelength of 400-410 nm, on one of recording layers of a recording medium having an intermediate layer at least between a first recording layer and second recording layer;
   a condenser lens (26) which has a focal length of fc and can focus light reflected on one of recording layers of a recording medium at a predetermined position; and
   a photodetector (27) having a light-receiving part with a light-receiving area of A, which can receive light that is given a predetermined convergence by the condenser lens (26), and output a signal corresponding to the intensity of the light,
   wherein the focal lengths of objective lens (24) and condenser lens take a range where A/M$^2$ is 1 < A/M$^2$ < 47 $\mu$m$^2$, when fc/fo is M and the thickness of the intermediate layer is 20 $\mu$m.

9. The optical disc drive according to claim 8, **characterized in that** a value RI which expresses a light intensity at an aperture rim of a lens as a ratio to an intensity at the center of light with respect to light coming into the objective lens (24), is 0.55 < RI < 0.7.

**10.** The optical disc drive according to claim 8 or 9, **characterized in that** the numerical aperture of the objective lens (24) is NA = 0.65.

**11.** An optical head unit **characterized by** comprising:

a photodetector (27) which has a light-receiving part of area A, and can output a signal corresponding to the intensity of received light; an objective lens (24) which has a focal length fo and a numerical aperture of 0.65 and can focus light having awavelength of 400-4100 nm on one of recording layers of a recording medium having an intermediate layer at least between a first recording layer and second recording layer; and a condenser lens (20) which has a focal length fc and can focus light reflected on one of recording layers of a recording medium at a predetermined position, wherein $A/M^2$ is $1 < A/M^2 < 47$ $\mu m^2$, when the fc/fo is M and the thickness of the intermediate layer is 20 $\mu m$.

FIG. 1

FIG. 2

FIG. 3A

FIG. 3B

FIG. 3C

F I G. 4

F I G. 5